# EUROPEAN PATENT APPLICATION

(11) **EP 4 708 177 A1**
(43) Date of publication of application: **11.03.2026**
(21) Application number: 25200180.5
(22) Date of filing: 04.09.2025
(51) Int. Cl.: G06Q 30/02, G06Q 30/0283, G06Q 50/16

(54) **APPRAISAL ENGINE(S) FOR IDENTIFYING QUALITATIVE VARIABLES OF COMPARABLE PROPERTIES FOR PROPERTY VALUATION**

(30) Priority: 04.09.2024 US 202418824226
(71) Applicant: Quantarium Group, LLC, Bellevue, Washington 98007 (US)
(72) Inventor: COCIORVA, Petru, Redmond, 98052 (US); ARON, Andrei T., Woodinville, 98072 (US); FANARU, Adrian, Sammamish, 98074 (US)
(74) Representative: Mathisen & Macara LLP

(57) **Abstract**

Systems and methods herein provide an appraisal engine and its related functions. In an example, an appraisal engine may identify a target property for appraisal and based on the target property determine comparable properties. The appraisal engine may also determine one or more qualitative variables associated with the target property and determine which of the comparable properties include the qualitative variables. In some cases, the appraisal engine may generate visual representations of the qualitative variables for a respective comparable property. The appraisal engine may generate a listing of a subset of comparable properties that include the qualitative variables and generate an appraisal value for the target property based on the subset of comparable properties including the qualitative variables.

## Description

### TECHNICAL FIELD

Aspects of the disclosure are related to the field of computer software applications and services and, in particular, to appraisal engines for identifying qualitative variables of comparable properties and valuation of a target property based on the comparable properties.

### BACKGROUND

Property appraisal is a fundamental practice universally employed to determine the value of real estate for various purposes, including sales, taxation, and financing. This process involves a detailed evaluation of a property by a licensed appraiser who considers factors such as location, condition, size, and market trends to provide an accurate estimate of its worth. Property appraisal is a common and essential step in real estate transactions, ensuring that both buyers and sellers have a clear understanding of a property's fair market value. This objective assessment helps facilitate negotiations, secure financing, and establish equitable sale prices, making it an indispensable tool in the real estate industry.

Under the conventional appraisal approach, appraisal of a target property typically begins with a comprehensive inspection, where the appraiser evaluates the property's physical characteristics, such as its size, layout, construction quality, and overall condition. Beyond the physical attributes, the appraiser also assesses the property's location, considering factors like neighborhood quality, proximity to amenities, and local market conditions. A critical component of the appraisal process is the comparison to similar properties, known as comparable properties or "comps." The appraiser identifies recently sold properties in the vicinity that are similar in terms of size, age, style, and features. Using these comparable properties, the appraiser adjusts for differences and derives an appraisal value that reflects the target property's position within the local market. This method, known as the sales comparison approach, ensures that the appraisal is grounded in actual market activity, providing a reliable basis for determining a fair sale price.

However, a significant challenge in the conventional appraisal process arises when trying to identify comparable properties that share qualitative features or variables with the target property. These qualitative variables-such as high-end kitchens, remodeled bathrooms, lake views, or solar panels-are often not easily identifiable from standard property listings or specifications. Instead, they are frequently mentioned only in the agent's notes or detailed descriptions, making them difficult to systematically compare across multiple properties. This lack of visibility can lead to an appraisal that does not fully account for these qualitative variables, potentially resulting in an inaccurate valuation of the target property.

Accordingly, there is a need for an appraisal engine, and its related functions, for identifying comparable properties containing one or more qualitative variables similar to a target property. As will be expanded on below, the appraisal engine may generate a value estimation (e.g., appraisal value) for a target property based on the subset of comparable properties containing the qualitative variables associated with the target property.

### SUMMARY

Technology disclosed herein includes software applications and services that provide an appraisal engine, and its related functions. Specifically, an appraisal engine for identifying qualitative variables of comparable properties and generating an appraisal value of a target property based on the qualitative variables is provided herein. In an aspect, an appraisal engine may determine a target property for valuation. Based on the target property, the appraisal engine may determine comparable properties for use in the valuation process. Once the comparable properties are identified, the appraisal engine may determine one or more qualitative variables for further refinement of the comparable properties. This may include receiving qualitative variables from a user or appraiser.

The appraisal engine may parse comparable specifications associated with the comparable properties. In an example, the appraisal engine may perform one or more natural language processes to identify comparable specifications that contain terms or descriptions indicative of the qualitative variables. In some cases, the appraisal engine may use machine learning or artificial intelligence models to parse the comparable specifications, including photographs of the property, to determine whether a respective comparable property includes a qualitative variable.

Once a subset of the comparable properties is identified as containing the qualitative variables, the appraisal engine may generate a listing of the subset. The listing may be provided to a user via a GUI. Based on the listing, the user may select one or more comparable properties for use in the appraisal process. In some cases, the appraisal engine may average the sale price of the selected comparable properties and receive a value adjustment for the target property from the user. Based on the value adjustment, and at times the average sale price, the appraisal engine may generate an appraisal value for the target property.

This Summary is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment for providing an appraisal engine, according to an embodiment herein;
Figure 2 illustrates an example operational scenario in which an appraisal engine is provided, according to an embodiment provided herein;
Figure 3 illustrates a process for providing an appraisal engine and its related functions, according to an embodiment herein;
Figure 4 illustrates an example map of properties for determining comparable properties, according to an embodiment herein;
Figure 5 illustrates an example prompt for defining qualitative variables for valuation of a target property, according to an embodiment herein;
Figure 6 illustrates an example text from a property specification illustrating qualitative variables identified by an appraisal engine, according to an embodiment herein;
Figure 7 illustrates an example photo gallery from a comparable specification, according to an embodiment herein;
Figure 8 illustrates an example graphical user interface (GUI) for determining an appraisal value of a target property, according to an embodiment herein; and
Figure 9 shows an example client device suitable for providing an appraisal engine and related functions, according to an embodiment herein.

### DETAILED DESCRIPTION

Property appraisal is a fundamental practice universally employed to determine the value of real estate for various purposes, including sales, taxation, and financing. This process involves a detailed evaluation by a licensed appraiser who considers factors such as location, condition, size, and market trends to provide an accurate estimate of a property's value. Under the conventional appraisal approach, the process begins with a comprehensive analysis of a target property's physical characteristics or variables, such as size, layout, construction quality, and overall condition. Additionally, the appraiser may assess the property's location, considering neighborhood quality, proximity to amenities, and local market conditions.

A critical component of the conventional appraisal process is the comparison of similar properties, known as comparable properties or "comps," to the target property. For this component, the appraiser identifies recently sold properties in the vicinity that are similar in terms of size, age, style, and features as the target property. Usually, three "similar" comparable properties are identified for use in the appraisal process. The appraiser then adjusts the sale price of each comparable property for differences (e.g., in characteristics, location, features) between the target property and a respective comparable property. The adjusted sale price for each of the comparable properties is then averaged to derive an appraisal value that reflects the target property's position within the local market.

However, a significant challenge in the conventional appraisal process is the difficulty in identifying comparable properties that share qualitative features or variables with the target property. In contrast to quantitative variables, such as gross living area (GLA) and number of bedrooms/bathrooms, qualitative variables such as high-end kitchens, remodeled bathrooms, lake views, or solar panels are often not easily identifiable from standard property listings or specifications, as they are typically mentioned only in the agent's notes or detailed descriptions. This makes it challenging to systematically account for these qualitative variables when selecting comparable properties. As a result, the appraisal process becomes more subjective, as appraisers must rely on their judgment to adjust the sale price of the few comparable properties they select. Given that only a small subset of available comparables is typically used-often just three out of many available properties-there is potential for bias. Adjustments for factors like size, condition, and location can vary significantly between appraisers, further introducing subjectivity. Moreover, when each comparable property is adjusted in isolation, the process can reflect the appraiser's personal preferences, leading to an appraisal that may not fully or accurately capture the true value of the target property.

Identifying comparable properties with similar qualitative variables is further complicated by the inconsistent terminology used by real estate agents. For example, a high-end kitchen might be described in various ways, such as a "chef's kitchen" or a "kitchen featuring SubZero and Wolf appliances," depending on the agent's preference. This inconsistency makes it difficult for appraisers to systematically identify and compare properties with similar features. Another example is a property with a spectacular view; one agent might refer to it as a "breathtaking lakeview," while another might describe it as a "serene waterfront vista." These variations in terminology create challenges in recognizing and matching qualitative features across different properties, which can lead to discrepancies in appraisals and further subjectivity in the process.

In some cases, the challenge of identifying comparable properties with qualitative features is compounded by the fact that the listing may not include any notes on these variables. Instead, the presence of such qualitative variables may only be revealed through images, such as photos showing a kitchen island or solar panels on the roof. When these qualitative variables are not explicitly mentioned in the property description or specifications, they may be overlooked during the appraisal process. Without a text-based description to highlight the qualitative variables, appraisers might not account for them when selecting comparable properties for a target property, leading to an incomplete assessment of the target property's value.

The above identified issues with conventional appraisal approaches may result in inaccurate or unreliable appraisal values of a target property. As can be appreciated, inaccurate or unreliable appraisal estimates of a target property may have several negative consequences. For buyers, an overestimated value may lead to overpaying for a property, resulting in financial strain and potential difficulties in securing adequate financing. Conversely, sellers might undervalue their property based on a flawed appraisal, leading to significant financial losses. For lenders, inaccurate appraisals increase the risk of approving loans that exceed the property's true value, potentially resulting in higher default rates and financial instability. Additionally, incorrect appraisals can affect property tax assessments, leading to unfair tax burdens or insufficient public revenues. These inaccuracies can also erode trust in the real estate market, causing delays and disputes in transactions and undermining the overall confidence of stakeholders. In summary, unreliable appraisals can disrupt financial planning, distort market dynamics, and create broader economic repercussions. Accordingly, there is a need for improved techniques and systems for appraising a target property that provides accurate and reliable appraisal values in a time efficient manner.

To address at least the shortcomings of conventional appraisal approaches identified above, example appraisal engine(s) are provided herein. As will be described in greater detail below, the appraisal engine(s) provided herein determine comparable properties that contain one or more qualitative variables associated with a target property. For example, the appraisal engine may determine a first qualitative variable, such as a high-end kitchen, that is associated with the target property. The appraisal engine may identify a listing of comparable properties corresponding to the target property, such as comparable properties that are temporally and proximately situated to the target property. Based on the specifications or listings associated with the comparable properties, the appraisal engine may identify which of the comparable properties include a high-end kitchen.

Once the subset of comparable properties containing one or more qualitative variables is identified, the appraisal engine may generate a listing of the subset of comparable properties (e.g., a listing of the comparable properties that contain the desired qualitative variables). The listing may include visual representations of the qualitative variables corresponding to each respective comparable property to aid an appraiser in selecting accurate comparable properties. For example, the visual representations may indicate that a first comparable property contains four of the desired qualitative variables, while a second comparable property contains only two of the desired qualitative variables. By providing visual representations of the qualitative variables for each of the comparable properties, an appraiser can quickly and effectively select comparable properties containing qualitative variables and quantitative variables most alike to the target property.

By identifying the comparable properties with similar qualitative variables to the target property, the appraisal engine allows for a more objective and reliable appraisal of the target property. That is, selection of comparable properties that share qualitative variables with the target property allows appraisers to establish a more accurate market value, ensuring that the target property's unique attributes are appropriately reflected. Accordingly, the appraisal engine minimizes subjectivity and enhances the credibility of the appraisal by grounding it in real-world market data.

As can be appreciated, having an accurate and reliable appraisal estimate of a target property is crucial for several reasons. First, it ensures that buyers and sellers have a clear and fair understanding of the property's market value, facilitating informed decision-making and equitable negotiations. For buyers, a precise appraisal prevents overpaying, while for sellers, it helps in setting a realistic asking price, maximizing marketability without undervaluing the asset. Accurate appraisals are also essential for lenders, as they rely on these evaluations to determine the appropriate amount of financing to extend, thereby mitigating the risk of loan defaults. Moreover, reliable appraisals support tax assessments, ensuring that property taxes are based on true market value, which promotes fairness in tax obligations. Overall, an accurate and dependable appraisal underpins the integrity of real estate transactions, providing confidence and security to all parties involved.

In addition to providing a more accurate and reliable appraisal value, the appraisal engine allows for this valuation to occur in a timely and resource efficient manner. Under conventional approaches, appraisers must manually review each comparable property's listing or specification, including detailed agent notes, to fully appreciate qualitative variables like custom features or scenic views. This process is time-consuming and resource-intensive, as it requires sifting through extensive information to identify and assess relevant characteristics. As can be appreciated, the requirement for appraisers to meticulously examine each property's unique attributes can significantly slow down the appraisal process and increase the potential for inconsistencies. Additionally, manual review of each comparable specification may be prone to error as different agents may interpret different phrasing or wording to be attributed to different qualitative variables.

As will be described in greater detail below, the appraisal engine may parse through the specifications for the comparable properties to determine which property contains a respective qualitative variable. Once a comparable property is identified as containing a qualitative variable, the appraisal engine may tag the comparable property with a qualitative tag for that respective qualitative variable (e.g., tagging the property as having a lakeview). In some cases, the appraisal engine may generate a visual representation of each qualitative variable that a respective comparable property contains and provide the visual representation(s) as associated with the property. The appraiser can then search the comparable properties to identify a subset of comparable properties that contain one or more qualitative variables and determine an adjustment value for a target property based on the sales data of the subset of comparable properties. Because the sales data used to determine the adjustment value and ultimately the appraisal value of the target property, corresponds to properties containing similar qualitative variables, as well as quantitative variables, the appraisal value may be founded on market data, thereby providing a reliable and justified valuation of the target property.

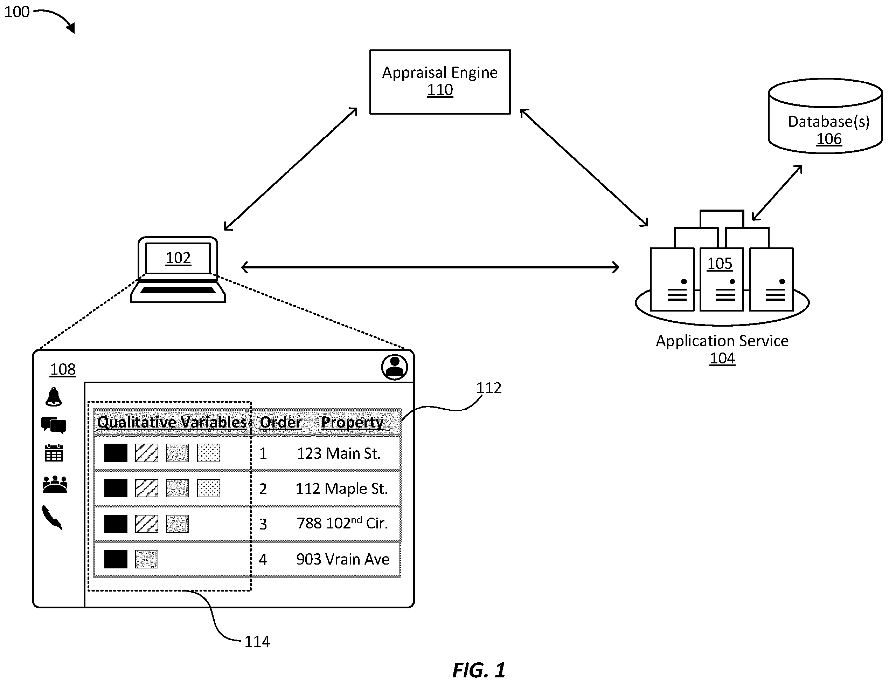

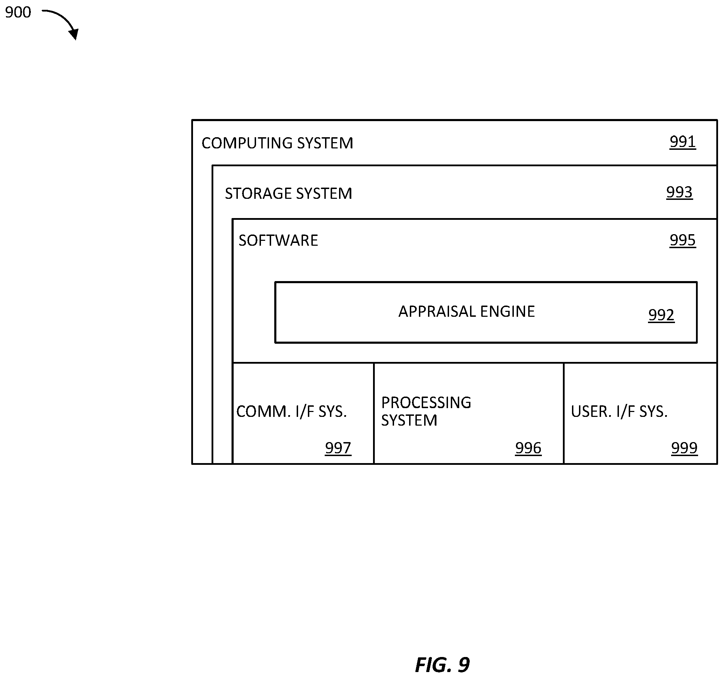

Turning now to **Figure 1,** Figure 1 illustrates an operational environment 100 for providing an appraisal engine, according to an embodiment herein. In particular, the operational environment 100 illustrates a client device 102 using an application service 104 for appraising target properties. To appraise target properties, the client device 102 may communicate with the application service 104 via one or more internets and intranets, the Internet, wired and wireless networks, local area networks (LANs), wide area networks (WANs), or any other type of network or combination thereof. Examples of the client device 102 may include personal computers, tablet computers, mobile phones, gaming consoles, wearable devices, Internet of Things (IoT) devices, and any other suitable devices, of which computing apparatus 991 in Figure 9 is also broadly representative.

In the illustrated example, the application service 104 operates in a cloud-based environment. As such, the application service 104 employs one or more server computers 113 co-located with respect to each other or distributed across one or more data centers to deliver its functionalities and services. Example servers include web servers, application servers, virtual or physical servers, or any combination or variation thereof, of which computing apparatus 991 in Figure 9 is broadly representative.

Broadly speaking, the application service 104 provides software application services to end points, such as the client device 102. In particular, the application service 104 may provide software application services involving property valuation. For example, the application service 104 may be a real estate application that aids appraisers in valuing or appraising properties. As noted above, valuation of property may be used for various purposes, including sales, taxation, and financing. To aid users, such as the client device 102, in property valuation, the application service 104 may provide one or more services for estimating appraisal values.

To interact with the application service 104, the client device 102 may load and execute software applications locally that interface with services and resources provided by the application service 104. The applications may be natively installed and executed applications, web-based applications that execute in the context of a local browser application, mobile applications, streaming applications, or any other suitable type of application. Example services and resources provided by the application service 104 include front-end servers, application servers, content storage services, authorization and authentication services, and the like.

As illustrated, the application service 104 may include an integration with the appraisal engine 110. In some embodiments, the appraisal engine 110 may be executed remotely by the application service 104 or a third party, while in other embodiments the appraisal engine 110 may be installed and executed locally on the client device 102. In still other embodiments, one or more functions of the appraisal engine 110, as described herein, may be installed and executed locally on the client device 102, while the remaining functions are integrated and executed remotely via the application service 104 or a third party. In an example, the application service 104 and/or the appraisal engine 110 may be a software-as-a-service (SaaS) solution that provides one or more of the functions described herein to the client device 102.

To determine an appraisal value of a target property, the client device 102 may interact with the appraisal engine 110 via the application service 104. For example, the client device 102 may submit a request to appraisal engine 110 for an appraisal value of a target property. The target property may be a piece of real estate, such as a home for sale. It should be appreciated that while the following discussion involves the target property being a single family home, the provided description is equally applicable to any other type of real estate. As will be described in greater detail below, in some embodiments, the application service 104 may provide a map from which the client device 102 may select the target property for appraisal. For example, the client device 102 may select the target property in the map and request to generate an appraisal value for the target property. The request may be submitted to the appraisal engine 110.

Responsive to receiving the request for appraising the target property, the appraisal engine 110 may determine comparable properties to the target property. As will be described in greater detail below, the appraisal engine 110 may determine the comparable properties based on their physical proximity (e.g., within a 1 mile radius or same neighborhood) to the target property and/or their temporal proximity to the request (e.g., within the last 6 months, last year, last 2 years). In some embodiments, the comparable properties are identified from one or more databases 106. The databases 106 may be real estate databases that store records on real estate within a respective region or geographical location, such as a county assessor's office database, a multiple listing service (MLS) database, a property appraisal districts database, or a government database that collects and stores property information.

Once the comparable properties are identified, the appraisal engine 110 may determine a variety of variables for which to compare the comparable properties and the target property. For example, based on a specification of the target property, the appraisal engine 110 may determine that quantitative variables such as number of bedrooms, number of bathrooms, lot size, garage type, and GLA should be used for the comparison. As can be appreciated, there may be variables that are inapplicable to a given target property, such as lot size for a condo, that if included may not provide any benefit to the comparison. As such, the appraisal engine 110 may analyze the specification of the target property to determine applicable variables for the comparison.

Once a listing of comparable properties is determined, the appraisal engine 110 may determine one or more qualitative variables for further refining the comparable properties. In some embodiments, the appraisal engine 110 may determine qualitative variables based on a query received from the client device 102. As will be described in greater detail below, an appraiser may enter a qualitative variable via a prompt on an appraisal software or select from qualitative variables used in previous searches.

Responsive to determining qualitative variables for further filtering the listing of comparable properties, the appraisal engine 110 may identify specifications corresponding to each of the comparable properties in the listing. These specifications may be referred to herein as comparable specifications. As will be described in greater detail below, the appraisal engine 110 may parse the comparable specifications to identify comparable properties that contain one or more of the qualitative variables, and then, in some cases, generate a listing 112 of the subset of comparable properties that contain one or more of the qualitative variables 114.

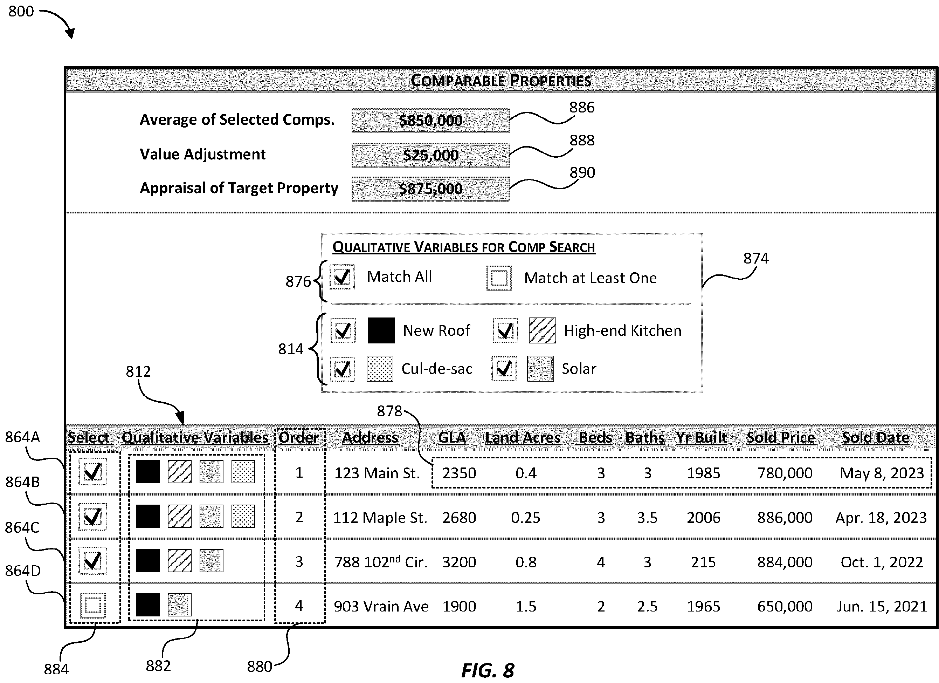

As illustrated, the listing 112 of the comparable properties containing the qualitative variables 114 is provided to a user of the client device 102 via a user interface 108 of an application executing on the client device 102. The application may correspond to the application service 104. The user interface 108 may provide the listing 112 of the comparable properties containing the qualitative variables 114 to the user such that the user can interact with the listing 112 of the comparable properties containing the qualitative variables 114. As will be described in greater detail below with respect to Figure 8, the listing 112 of the comparable properties containing the qualitative variables 114 may allow a user to select one or more of the comparable properties for valuing the target property. For example, the appraisal engine may average the sale price of selected comparable properties from the listing 112 and include an input field into which the user can provide a value adjustment. That is, the user may provide an amount to adjust the value of the target property based on the selected properties from the listing 112. Once the value adjustment is provided, the appraisal engine 110 may generate an appraisal value for the target property. In some embodiments, this may include aggregating the value adjustment received from the client device 102 with the averaged sale price of the comparable properties selected from the listing 112.

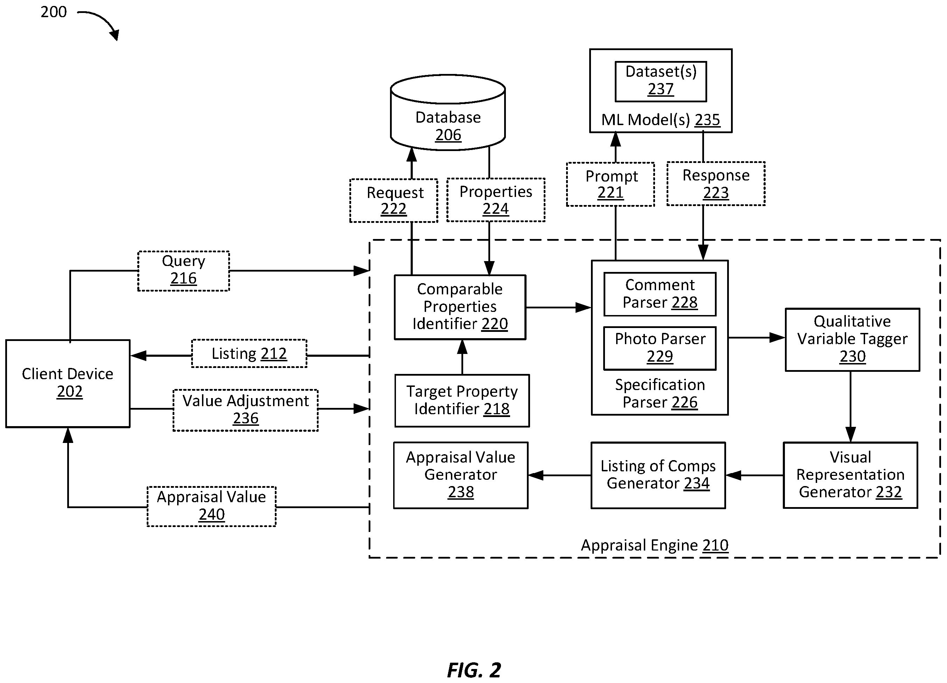

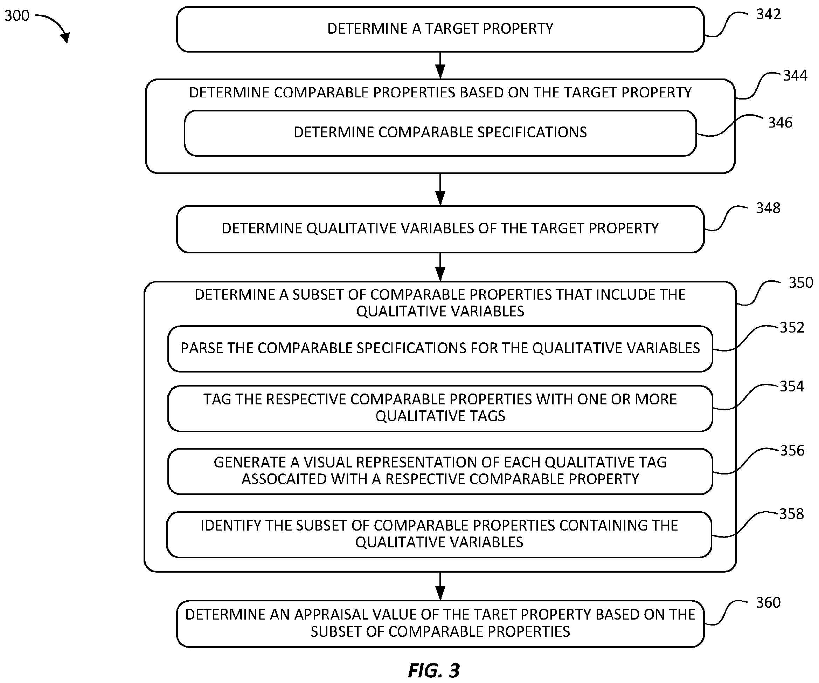

Turning now to **Figure 2,** Figure 2 illustrates an example operational scenario 200 in which an appraisal engine 210 is provided, according to an embodiment herein. For ease of illustration, Figure 2 is described with respect to **Figure 3****,** which provides a process 300 for providing an appraisal engine and its related functions, such as the appraisal engine 210, according to an embodiment herein. Although Figure 3 is described in relation to Figure 2, it should be appreciated that the process 300 is equally applicable to the remaining Figures and components therein.

As illustrated, a client device 202, which may be the same or similar to the client device 102, may submit a query 216 to the appraisal engine 210, which may be the same or similar to the appraisal engine 110, to generate an appraisal value of a target property. In embodiments where the appraisal engine 210 is part of an application service, such as the application service 104, the query 216 may be transmitted to the appraisal engine 210 via the application service 104. Based on the query 216, the appraisal engine 210 may determine or identify the target property for valuation (342). In some embodiments, the appraisal engine 210 may include a target property identifier 218. As can be appreciated, the query 216 for appraisal of the target property includes or otherwise indicates the target property for valuation. For example, the query 216 may include a target specification of the target property as an attachment, may include a link to the target specification, or otherwise direct the appraisal engine 210 as to where the target specification of the target property is stored. It should be appreciated that as used herein a specification may generally refer to a comprehensive document containing detailed information about a property, including its features, dimensions, materials, and other pertinent details essential for construction, renovation, or valuation purposes.

To identify the target property, the target property identifier 218 may analyze the query 216, including any attachments or links to determine a target specification for the target property. For example, the target property identifier 218 may fetch the target specification for the target property from a database, such as database 206, or may parse an attachment included in the query 216. The database 206 may be the same or similar to the database 106 such that the database 206 collects and/or stores real estate information, such as the target specification.

Based on the target property, the appraisal engine 110 may determine comparable properties for the valuation process (344). For example, the appraisal engine 110 may determine quantitative variables based on the target property. In particular, the appraisal engine 110 may determine quantitative variables based on the target specification. As noted above, quantitative variables may include measurable features or characteristics of the target property, such as GLA, lot size, number of bedrooms, number of bathrooms, and the like. The target specification may also include information such as location, neighborhoods, property type (e.g., single family home, condo), and the like. The appraisal engine 210 may use this information and/or the quantitative variables to determine comparable properties for the valuation process.

In some embodiments, the appraisal engine 210 may include a comparable properties identifier 220. The comparable properties identifier 220 may determine comparable properties based on the target property, such as identifying properties that recently sold near the target property. In some embodiments, the comparable properties identifier 220 may identify properties that are physically proximate to the target property, such as in the same zip code or neighborhood, that recently sold. In other embodiments, the comparable properties identifier 220 may identify properties that sold temporally proximate to the target property. That is, the comparable properties identifier 220 may identify properties that sold within a set time period from when the appraisal of the target property is requested. Examples include properties that sold in the last 6 months, the last year, or in the last two years from when the appraisal of the target property is being generated. In still other embodiments, the comparable properties identifier 220 may identify properties that are both physically and temporally proximate to the target property.

To identify properties to be included as comparable properties, the comparable properties identifier 220 may determine comparable specifications for the comparable properties (346). For example, the comparable properties identifier 220 may transmit a request 222 to the database 206 for specifications of properties that sold in the past two years and are physically proximate to the target property. Responsive to the request 222, the comparable properties identifier 220 may receive a listing of properties 224 that meet the requested criteria (e.g., physical proximity, temporal proximity).

The appraisal engine 210 may then filter the listing of properties 224 to determine similar properties to the target property. That is, the listing of properties 224 may be filtered based on the quantitative variables identified from the target specification such that only similar properties or properties having similar measurable features or characteristics to the target property are selected as comparable properties. For example, the comparable properties identifier 220 may filter the listing of properties 224 by GLA such that only properties having similar GLAs (e.g., plus or minus 500 square feet) to the target property are included as comparable properties.

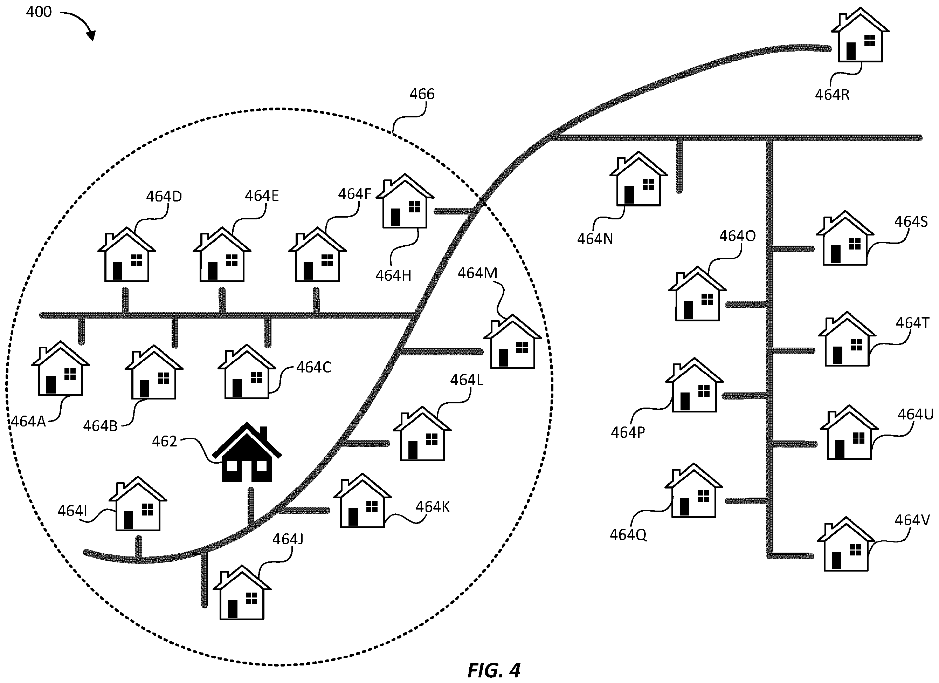

In some embodiments, the appraisal engine 210, or the related application service, may generate a map based on the listing of properties 224. Referring now to **Figure 4****,** an example map 400 of properties 464A-V is provided, according to an embodiment herein. The map 400 may be generated based on the listing of properties 224 received from the database 206. For example, the listing of properties 224 may include the properties 464A-V. It should be appreciated, that in some embodiments, the database 206 may be hosted by the application service and as such the application service may generate the map 400 responsive to the query 216. In similar embodiments, the application service may generate the map 400 of the properties 224 such that the client device 202 can select a target property, such as the target property 462, to request an appraisal value. Responsive to selecting the target property 462, the appraisal engine 210 may perform one or more of the functions described herein.

From the map 400, a user, such as the user of the client device 202, may select a subset of the properties 464A-V to include as comparable properties. As noted above, similar properties may be properties that are physically and/or temporally proximate to the target property 438. In some embodiments, the similar properties may also be properties that have similar quantitative variables or characteristics to the target property. As illustrated, a user may delineate with an area 466 from which similar properties should be included. That is, any properties outside of the area 466, such as the properties 450N-V should be excluded as comparable properties, and the properties 464A-M inside of the area 466 may be used as comparable properties. In some embodiments, the 464A-M may be further filtered based on the variables to determined comparable properties. Once the comparable properties are determined, then the appraisal engine 210 may generate a listing of the comparable properties, which for ease of discussion include properties 464A-M.

Once the listing of comparable properties 464A-M is identified, the appraisal engine 210 may determine one or more qualitative variables associated with the target property 462 (348) or for assessment of the target property 462. In some embodiments, the query 216 may be representative of more than one query from the client device 202, and as such, include a query that includes one or more qualitative variables.

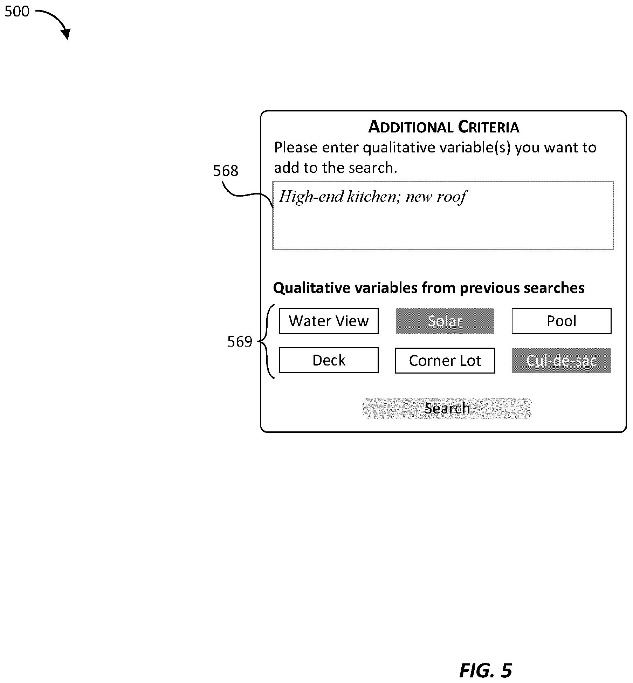

Referring now to **Figure 5****,** an example prompt 500 for defining qualitative variables for valuation of a target property 462 is illustrated, according to an embodiment herein. As shown, the prompt 500 may include a text box 568 into which a user can define qualitative variables for refinement of the listing of comparable properties 464A-M. Here, the user inputs the qualitative variables "high-end kitchen" and "new roof." In some embodiments, the prompt 500 may also provide selections 569 of qualitative variables used in previous searches. In some embodiments, the selections 569 may be qualitative variables used in valuations of properties in the similar neighborhood as the target property 462 or previous valuations performed by the user. As shown, the user selects the qualitative variables "solar" and "cul-de-sac" from the selections 569. Once the user selects or defines the qualitative variables for the search, the user may select to search the listing of comparable properties 464A-M for properties that include the defined qualitative variables. In some cases, responsive to submitting the prompt 500, the appraisal engine 210 may receive the defined qualitative variables as a query 216.

The appraisal engine 210 may determine a subset of the comparable properties 464AM that include the qualitative variables (350), such as comparable properties 462A-D that include the qualitative variables selected via the prompt 500. To determine the subset of comparable properties 464A-D that contain the qualitative variables, the appraisal engine may identify the comparable specifications for the respective comparable properties 464A-M on the listing and parse the comparable specifications for the qualitative variables (352). In some embodiments, the appraisal engine 210 may include a specification parser 226 that parses each specification of the comparable properties 464A-M to determine whether a respective property contains a qualitative variable. As those skilled in the art readily appreciate specifications typically include text descriptions, photographs, and maps that provide comprehensive details about the respective property. As such, the comparable specifications may offer a visual and descriptive overview, highlighting key features, location, and other essential attributes.

Since the comparable specifications contain different formats of information, the specification parser 226 may include a text parser 228 and a photo parser 229. As noted above, one shortcoming of conventional approaches to identifying qualitative variables for property valuation is that these features of properties are often described in the agent's notes. As such, terminology or phrasing for the same qualitative variable may vary, such that simply doing a keyword search for a term is likely to fail to identify all properties containing that feature. For example, for the qualitative variable "high-end kitchen," descriptions such as "a chef's kitchen," "high-end appliances," "recent remodeled," or even a listing of the appliance types, such as "a Subzero^{®} refrigerator" or "Viking^{®} 48 inch range" may all indicate that the property includes a "high-end kitchen." However, under conventional approaches, unless the comparable specification included the exact phrase of "high-end kitchen," or the user manually read each specification, the property may not be identified as containing the qualitative variable.

To parse the comparable specifications and identify alternative descriptions of qualitative variables, the text parser 228 may use one or more natural language processing (NLP) techniques to identify qualitative variables within a respective specification. By analyzing the textual content, the text parser 228 can leverage NLP algorithms to extract qualitative variables from the descriptions of property, as well as the agent notes on the property. Through techniques like synonym recognition, context analysis, and semantic understanding, the text parser 228 can detect variations in language and interpret different words or phrases that refer to the same concept. For example, NLP can recognize that "water view" and "lake front" are equivalent, even though they use different wording. This ability enhances the accuracy of the text parser 228 by capturing the full range of expressions used in property listings.

In some embodiments, the specification parser 226 may leverage one or more ML model(s) 235 for identifying qualitative properties within a respective specification. Employment of the ML model(s) 235 may be in addition to or in place of the comment parser 228. It should be appreciated that while the ML model(s) 235 are illustrated as separate from the appraisal engine 210, in some embodiments the ML model(s) 235 may be part of the appraisal engine 210, such as hosted by a respective application service. In other embodiments, however, the ML model(s) 235 may be hosted and executed remotely from the appraisal engine 210, such as by a third party.

The appraisal engine 210 may use the ML model(s) 235 to identify qualitative variables, such as "high-end kitchen," from text within the comparable specifications. The ML model(s) 235, which may include NLP algorithms like recurrent neural networks (RNNs) or transformers, are designed to recognize patterns and associations in text data. For instance, an RNN could be used to analyze the sequence of words in a listing to identify phrases or descriptions that correlate with "high-end kitchen," such as "granite countertops," "custom cabinetry," or "premium appliances." The ML model(s) 235 may also identify brand names as corresponding to specific keywords, such as "Subzero appliances" as associated with high-end kitchens.

To accurately identify related phrases and descriptions, the ML models 235 may be trained on large datasets 237 containing annotated text, where qualitative variables and their related terms or phrases are labeled. Over time, as the models are exposed to more data, they learn to identify not only exact matches for a keyword but also related or synonymous terms. For example, the model might learn that "luxury kitchen" or "gourmet cooking area" may be often associated with "high-end kitchen" and thus should be flagged as relevant. This continuous learning process enhances the ML model's 235 ability to accurately identify a wide range of features related to specific qualitative variables, as well as continuously adapt as verbiage and common parlance changes and new features are introduced into the real estate environment (e.g., new brand of high-end appliances is introduced to the market).

As illustrated, the specification parser 226 may generate a prompt 221 that contains text from one or more of the comparable specifications and a request to identify features related to the one or more qualitative variables. In some embodiments, the comment parser 228 may identify the text, such as the agent notes or description of the property, from a comparable specification, and then the specification parser 226 may generate the prompt 221 with that text. The appraisal engine 210 may then submit the prompt 221 to the ML model(s) 235 and responsively receive a response 223. The response 223 may be generated by the ML model(s) 235 and identify whether or not a respective comparable specification includes any of the qualitative features. In some embodiments, the appraisal engine 210 may submit a single comparable specification at a time to the ML model(s) 235, while in other embodiments, the appraisal engine 210 may submit multiple comparable specifications at a time for analysis.

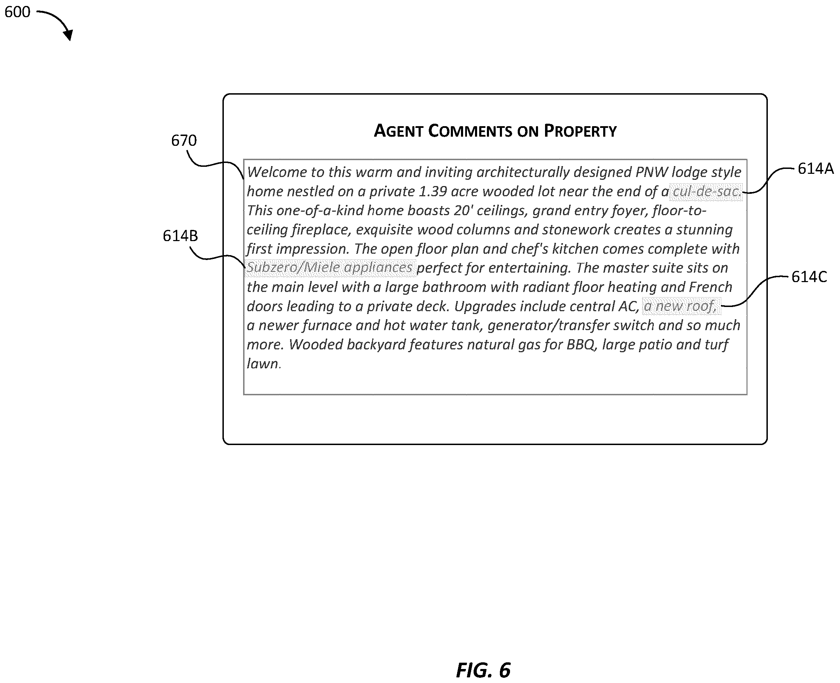

Referring now to **Figure 6****,** an example text 600 from a specification illustrating qualitative variables identified by the appraisal engine 210 is provided, according to an embodiment herein. The text 600 provides the agent comments on the property that may be identified by the specification parser 226 from a respective comparable specification. This text 600 may be submitted to the ML model(s) 235 as part of the prompt 221 requesting that the model determine whether the property includes any of the qualitative variables selected via the prompt 500. For example, the prompt 221 may request that the ML model(s) 235 determine whether the text 600 contains reference to a high-end kitchen, a new roof, solar power, or a cul-de-sac. As illustrated, the ML model(s) 235 may identify that the text 600 contains the qualitative variable 614A describing that the property is located in a cul-de-sac, the qualitative variable 614B describing that the kitchen includes Subzero/Miele appliances, indicating that the kitchen is "high-end," and the qualitative variable 614C describing that the property has a new roof. Based on the above, the response 223 may provide summary such as, "this property is located in a cul-de-sac, has a high-end kitchen, and has a new roof."

In addition to analyzing the text of the specifications, the specification parser 226 may analyze the photographs of the property to identify whether or not the property includes the qualitative variables. For example, the specification parser 226 may include a photo parser 229. The photo parser 229 may be or include a ML model or AI model designed to identify qualitative variables from photographs. In some cases, instead of the photo parser 229 including the ML or AI models, the photo parser 229 may be in operational communication with the one or more ML model(s) 235 for identifying qualitative variables from photographs. For example, the photo parser 229 may identify photographs from a respective comparable specification and submit the photographs to the ML model(s) 235 via the prompt 221, requesting identification of the qualitative variables from the photographs.

In such cases, the ML model(s) 235 may be or include a convolutional neural network (CNN) architecture, which is able to process visual data. The CNN is composed of multiple layers, including convolutional layers that apply filters to input images, pooling layers that reduce the dimensionality of the data, and fully connected layers that integrate the extracted features for classification or detection tasks. Such a model can be trained using a labeled dataset 227 of images, where each image is annotated with the relevant features or objects present. During the training process, the ML model(s) 235 learn to recognize patterns and features by minimizing the error between its predictions and the actual labels through a process known as backpropagation and gradient descent.

Examples of ML model(s) 235 used for visual data analysis include ResNet, which employs residual learning to train deeper networks, and YOLO (You Only Look Once), a model optimized for real-time object detection. Transfer learning can also be utilized, where a pre-trained model, such as Inception or VGG, can be fine-tuned on a new dataset 227, leveraging the learned representations from vast amounts of prior data to improve accuracy with less computational effort. Through iterative training and validation, the ML model's 235 performance is optimized to accurately identify features in new, unseen photographs, enabling accurate and quick identification of qualitative variables. For example, the ML model 2335 may be or include a computer vision system or operation such as disclosed in U.S. Patent Application No. 17/540,864 entitled Computer Vision Property Evaluation, which was filed on December 2, 2021 and is hereby incorporated herein.

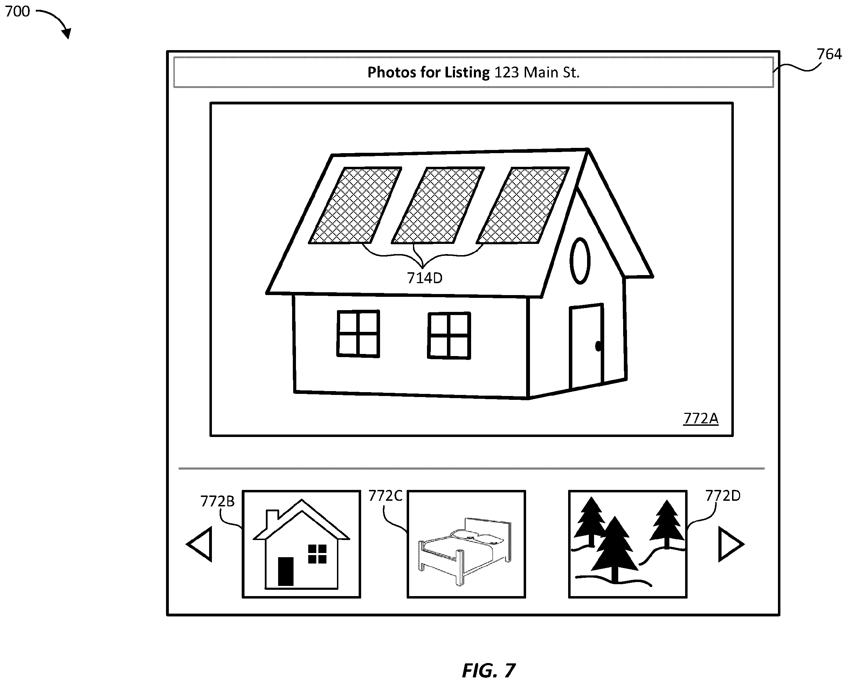

Referring now to **Figure 7****,** an example photo gallery 700 from a comparable specification is illustrated, according to an embodiment herein. As shown, the photo gallery 700 includes photographs 772A-D of a respective comparable property 764. Based on the photographs 772A-D, the specification parser 226 may determine whether or not the comparable property 764 contains any of the qualitative variables. For example, the photo parser 229 may submit the photograph 772A via the prompt 221 to the ML model(s) 235 requesting identification of any of the qualitative variables listed above. Based on the prompt 221, the ML model(s) 235 may identify solar panels 714D on the roof of the house captured in the photograph 772A. As such, the ML model(s) 235 may generate the response 223 indicating that the comparable property 764 includes the qualitative variable 714D of solar.

Once the appraisal engine 210 identifies which of the comparable specifications contain a description of a respective qualitative variable, the appraisal engine 210 may tag the respective comparable properties 464A-D with corresponding qualitative tags (354). In particular, the appraisal engine 210 may include a qualitative variable tagger 230 that generates and tags a comparable property as containing a respective qualitative variable based on the results from the specification parser 226. As can be appreciated, a qualitative tag may be a tag that indicates the comparable specification contains a respective qualitative variable.

In some embodiments, qualitative tag may be a Boolean tag. In such an embodiment, qualitative variable tagger 230 may apply Boolean logic operates, such as AND, OR, and NOT to the results (e.g., response 223) from the specification parser 226 indicating the presence of a respective qualitative variable within a corresponding specification. For instance, to tag a comparable specification with a specific qualitative variable, the qualitative variable tagger 230 may analyze the results on the presence of the qualitative variables from the specification parser 226 for a respective comparable specification. The AND operator may be used to ensure that multiple qualitative variables must all be present within the specification for a tag to be applied, while the OR operator can be used to tag a document if any one of several qualitative variables are detected. The NOT operator can be used to exclude specifications that do not contain any of the qualitative variables.

In some cases, the qualitative variable tagger 230 may generate and automatically tag a specification as containing respective a qualitative variable. For example, based on the results from the specification parser 226, the qualitative variable tagger 230 may tag the respective specification with one or metadata qualitative tags. Once applied, the qualitative tags may become part of the specification's metadata, allowing for easy retrieval through filtering in the future, as will be described below.

In some embodiments, for each of the qualitative tags associated with a respective specification, the appraisal engine 210 may generate a visual representation (356). For example, the appraisal engine 210 may include a visual representation generator 232 that identifies whether a comparable specification contains a qualitative variable and generates a visual representation of that qualitative variable for display to the client device 202. As will be described in greater detail below with respect to Figure 8, the visual representations may be a symbol, text, balloon, highlight, or the like that indicates a respective comparable property contains a qualitative variable.

Once the appraisal engine 210 parses the comparable specifications corresponding to the comparable properties 464A-M and determines which of the comparable properties 464A-D contain respective qualitative variables, the appraisal engine 210 may determine the subset of comparable properties 464A-D containing selected qualitative variables (358). In particular, the appraisal engine 210 may include a listing of comps generator 234 that filters the listing of comparable properties 464A-M based on the qualitative variables to identify the subset of properties that contain the qualitative variables. For example, the appraisal engine 210 may have parsed the comparable specifications to tag the comparable properties 464A-D based on the presence of the qualitative variables: high-end kitchen, new roof, solar, and cul-de-sac. The generator 234 may filter the comparable properties 464A-D to identify a further subset of properties that contain one or more of these qualitative variables. As will be described in greater detail below, the comparable specifications may be further filtered based on the requested qualitative variables, such as the user of the client device 202 filtering and ranking the comparable properties 464A-D based on one or more of the qualitative variables. For example, the comparable properties 464A-D could be filtered to identify a subset that includes a high-end kitchen or a subset that includes a high-end kitchen, a new roof, and solar.

The listing of comps generator 234 may generate the listing 212. As noted above, the listing 212 may be a listing of the subset of comparable properties 464A-D that contain the qualitative variables. Once generated, the appraisal engine 210 may provide the listing 212 to the client device 202. Based on the listing 212, the client device 202 may select one or more of the comparable properties 464A-D to include in the valuation of the target property 462. As those skilled in the art readily appreciate, typically 3-5 properties are used appraise a target property, though any number can be used, depending on the tapestry of comparable properties 464A-M and their similarity to the target property 462. Using the selected properties from the listing 212, the user may determine a value adjustment 236 for the target property 462. For example, based on the selected comparable properties, the user may increase the value or decrease the value of the target property 462. The client device may submit the value adjustment 236 to the appraisal engine 210, which may generate an appraisal value 240 for the target property 462. In particular, the appraisal engine 210 may include an appraisal value generator 238 which may generate the appraisal value 240 of the target property 462 and provide the appraisal value 240 to the client device 202.

Referring now to **Figure 8****,** an example graphical user interface (GUI) 800 for determining an appraisal value of a target property is illustrated, according to an embodiment herein. In particular, the GUI 800 may be generated by the appraisal engine 210 and include a listing 812 of a subset of comparable properties 864A-D. The listing 812, which may be the same or similar to the listing 112, includes the comparable properties 864A-D that are identified from a larger listing of comparable properties. As shown, for each of the comparable properties 864A-D, the listing 812 may include respective quantitative properties 878 for each property. Additionally, the listing 812 may include visual representations 882 that indicate which qualitative properties each comparable property 864A-D includes.

As part of the GUI 800, selections 874 may be provided to allow a user to filter the subset of comparable properties based on the qualitative variables 814. As shown, the selections 874 may include options 876 to require that appraisal engine 210 only identify comparable properties that match (e.g., include) all of the qualitative variables or match at least one. The selections 874 also allows the qualitative variables 814 identified by the user to be used for the search and allows selection or deselection of a respective qualitative variable. For example, the user may filter the subset of comparable properties based on only one of the qualitative variables to identify only properties that contain that qualitative variable, or the user may filter to identify properties that contain all of the qualitative variables.

In some embodiments, the appraisal engine 210 may rank the subset of comparable properties 864A-D based on the property's qualitative tags. For example, as shown, the appraisal engine 210 may include an order 880 which ranks the comparable properties 864A-D. The ranking may be based on the number of matches between the selections 874 and a respective property. Here, the comparable properties 864A and 864B include all of the qualitative variables 814. As such, the appraisal engine 210 may range these comparable properties 864A-B higher than the comparable properties 864C-D, which don't include all four qualitative variables 814. Similarly, because the comparable property 864C includes three qualitative variables 814 and the comparable property 864D only includes two qualitative variables 814, the appraisal engine 210 may rank the comparable property 864C higher than the comparable property 864D.

In embodiments where two comparable properties, such as the properties 864A-B contain the same number of qualitative variables, the appraisal engine 210 may incorporate the quantitative variables 878 into the ranking. For example, the appraisal engine 210 may rank comparable properties higher that have similar quantitative variables 878 to the target property 462, when the qualitative variables 814 are the same. Here, the comparable property 864A may be ranked higher than the property 864B because the quantitative variables 878 of the property 864A may be more similar to the target property 462 than the comparable property 864B.

From the listing 812, the user may select which of the comparable properties 864A-D to use in the appraisal of the target property 462. As shown, each of the comparable properties 864A-D may include a selection 884 that allows the user to select a desired property to include in the appraisal process. Once the user selects the desired comparable properties 864A-C, the appraisal engine 210 may generate an average sale price 886 of the selected comparable properties 864A-C. The average sale price 886 may be the average, mean, or median of the sale prices of the comparable properties 864A-C, here it's the average. In some embodiments, the sale prices of the comparable properties 864A-C may be adjusted, such to bring the prices into present-day dollars, to generate the average sale price 886. In other embodiments, the sale prices of the comparable properties 864A-C may be averaged (mean or median) and then adjusted to generate the average sale price 886. The appraisal engine 210 may generate the average sale price 886 based on the specifications for each of the comparable properties 864A-C, such as from the quantitative variables 878 associated with each property.

The GUI 800 may also include a value adjustment 888 into which a user can input an amount to increase or decrease the value of the target property 862 based on the comparable properties 864A-C. In some cases, the value adjustment 888 may be added or subtracted from the average value 886 to determine an appraisal value 890 of the target property 462. In some embodiments, the user may input the appraisal value 890 of the target property 462, while in other embodiments, the appraisal engine 210 may determine the appraisal value 890 based on the average sale value 886 of the selected comparable properties 864A-C and the value adjustment 888.

In some embodiments, the appraisal engine 210 may generate an adjustment recommendation (not shown) based on the detected differences in qualitative variables 814 and quantitative variables 878 between the target property 862 and the selected comparable properties 864A-C. That is, the appraisal engine 210 may determine the difference between the target property and an average of the comparable properties 864A-C for a given variable. For example, the appraisal engine 210 may determine that the target property includes all four qualitative variables 814 but the average of the comparable properties 864A-C is slightly below all four qualitative variables. Additionally, for the quantitative variables 878, the target property 462 may have a GLA that is larger than the averaged GLA of the comparable properties 864A-C. Based on such differences, the appraisal engine 510 may determine an adjustment recommendation. In such embodiments, the appraisal engine 510 may provide the adjustment recommendation on the GUI 800. For example, the adjustment recommendation may be provided in the value adjustment 888 input field as greyed text or otherwise indicated to be a recommendation. The user may use the adjustment recommendation to determine the value adjustment 888, including accepting the adjustment recommendation.

In some embodiments, once the appraisal value 890 for the target property 462 is determined, the appraisal engine 210 may publish the appraisal value 890 or otherwise update a respective target specification with the value 890. For example, the user may select to accept or submit the appraisal value 890 for the target property 462. Responsive to submission, respective property listings or other documentation corresponding to the target property 462, may be updated with the appraisal value 890. In some cases, this may include updating a database or documents hosted by third parties.

Referring to **Figure 9,** Figure 9 illustrates a computing apparatus 991 that may be used for providing an appraisal engine and related functions, as described herein. For example, the client device 102 or 202 may be or include the computing apparatus 991. As illustrated, the computing apparatus 991 includes a processing system 992 that includes a microprocessor and other circuitry that retrieves and executes software 995 from storage system 993. The processing system 992 may be implemented within a single processing device but may also be distributed across multiple processing devices or sub-systems that cooperate in executing program instructions. Examples of the processing system 992 include general purpose central processing units, graphical processing units, application specific processors, and logic devices, as well as any other type of processing device, combinations, or variations thereof.

The storage system 993 may comprise any computer-readable storage media or medium readable by processing system 992 and capable of storing software 995. The storage system 993 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 993 may also include computer readable communication media over which at least some of the software 995 may be communicated internally or externally. The storage system 993 may be implemented as a single storage device but may also be implemented across multiple storage devices or sub-systems co-located or distributed relative to each other. The storage system 993 may comprise additional elements, such as a controller capable of communicating with the processing system 992 or possibly other systems.

The software 995 (including appraisal engine process 996) may be implemented in program instructions and among other functions may, when executed by the processing system 992, direct the processing system 992 to operate as described with respect to the various operational scenarios, sequences, and processes illustrated herein. For example, the software 995 may include program instructions or an algorithm for implementing an appraisal engine and related functions, such as the process 300, as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 995 may include additional processes, programs, or components, such as operating system software, virtualization software, or other application software. The software 995 may also comprise firmware or some other form of machine-readable processing instructions executable by the processing system 992.

In general, the software 995 may, when loaded into the processing system 992 and executed, transform a suitable apparatus, system, or device (of which computing apparatus 991 is representative) overall from a general-purpose computing system into a special-purpose computing system customized to generate features, functionality, and user experiences provided by the appraisal engine. Indeed, encoding the software 995 on the storage system 993 may transform the physical structure of the storage system 993. The specific transformation of the physical structure may depend on various factors in different implementations of this description. Examples of such factors may include, but are not limited to, the technology used to implement the storage media of the storage system 993 and whether the computer-storage media are characterized as primary or secondary storage, as well as other factors.

For example, if the computer readable storage media are implemented as semiconductor-based memory, the software 995 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 997 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between the computing apparatus 991 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of may include, but are not limited to, an electronic, optical, magnetic, or other storage device capable of providing a processor, such as the processor in a web server, with processor-executable instructions. Other examples of non-transitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for providing an appraisal engine and related functions. Those of ordinary skill in the art will realize that the foregoing description is illustrative only and is not intended to be in any way limiting. Reference is made in detail to implementations of examples as illustrated in the accompanying drawings. The same reference indicators will be used throughout the drawings and the following description to refer to the same or like items.

Additionally, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure. In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a computing apparatus comprising: a computer-readable storage medium; an appraisal engine comprising processor-executable instructions stored on the computer-readable storage medium; and one or more processors coupled to the computer-readable storage medium and configured to execute the processor-executable instructions, wherein the processor-executable instructions, when executed by the one or more processors, direct the computing apparatus, to at least: determine a target property for appraisal; determine a plurality of comparable properties based on the target property; determine a first qualitative variable associated with the target property; generate a plurality of visual representations for a subset of comparable properties, wherein: each of the visual representations indicates that a corresponding comparable property of the subset of comparable properties comprises the first qualitative variable; and the plurality of comparable properties comprises the subset of comparable properties; and determine an appraisal value of the target property based on the plurality of visual representations.

Example 2 is the computing apparatus of any previous or subsequent Example, wherein the processor-executable instructions to generate the plurality of visual representations, when executed by the one or more processors, further direct the computing apparatus to: determine a plurality of specifications, wherein each of the plurality of specifications correspond to a respective comparable property of the plurality of comparable properties; parse each of the plurality of specifications based on the first qualitative variable; identify a subset of specifications from the plurality of specifications comprising the first qualitative variable; tag each of the subset of comparable properties corresponding to the subset of specifications with a first qualitative tag; and generate a first visual representation indicating the first qualitative tag for the subset of comparable properties, wherein the plurality of visual representations comprises the first visual representation.

Example 3 is the computing apparatus of any previous or subsequent Example, wherein the processor-executable instructions to determine the first qualitative variable associated with the target property, when executed by the one or more processors, further direct the computing apparatus to: receive, from a client device, a query comprising the first qualitative variable.

Example 4 is the computing apparatus of any previous or subsequent Example, wherein the processor-executable instructions, when executed by the one or more processors, further direct the computing apparatus to: determine a plurality of qualitative variables associated with the target property, wherein the plurality of visual representations indicate that a corresponding comparable property of the subset of comparable properties comprises one or more of the plurality of qualitative variables; determine a quantity of qualitative variables associated with each comparable property of the subset of comparable; and rank the subset of comparable properties based on the quantity of qualitative variables associated with each comparable property.

Example 5 is the computing apparatus of any previous or subsequent Example, wherein the processor-executable instructions, when executed by the one or more processors, further direct the computing apparatus to: determine a subset of comparable properties comprising the first qualitative variable; tag each comparable property of the subset of comparable properties with a first qualitative tag; and filter the plurality of comparable properties based on first qualitative tag to identify the subset of comparable properties.

Example 6 is the computing apparatus of any previous or subsequent Example, wherein the processor-executable instructions to determine the plurality of comparable properties, when executed by the one or more processors, further direct the computing apparatus to: determine a listing of properties comprising physical proximity to the target property; determining a subset of properties within the listing of properties comprising temporal proximity to the target property; and filtering, by the appraisal engine, the subset of properties to determine the plurality of comparable properties.

Example 7 is a method for estimating an appraisal value of a target property based on a plurality of comparable properties, the method comprising: determining, by an appraisal engine, a target property for appraisal, wherein the target property comprises a target specification; determining, by the appraisal engine, a plurality of comparable properties based the target specification; determining, by the appraisal engine, one or more qualitative variables of the target property; determining, by the appraisal engine, a plurality of comparable specifications, wherein each comparable specification corresponds to a respective comparable property of the plurality of comparable properties; determining, by the appraisal engine, a subset of comparable properties from the plurality of comparable properties comprising the one or more qualitative variables; and determining, by the appraisal engine, the appraisal value of the target property based on the subset of comparable properties.

Example 8 is the method of any previous or subsequent Example, wherein determining the subset of comparable properties of the plurality of comparable properties comprising the one or more qualitative variables comprises: parsing, by the appraisal engine, each of the comparable specifications corresponding to the plurality of comparable properties for the one or more qualitative variables; and identifying, by the appraisal engine, the subset of comparable properties based on a respective comparable specification comprising the one or more qualitative variables.

Example 9 is the method of any previous or subsequent Example, wherein parsing, by the appraisal engine, each of the comparable specifications corresponding to the plurality of comparable properties for the one or more qualitative variables comprises performing a natural language (NL) process on text within each of the comparable specification.

Example 10 is the method of any previous or subsequent Example, wherein determining the subset of comparable properties of the plurality of comparable properties comprising the one or more qualitative variables comprises: tagging, by the appraisal engine, the subset of comparable properties with a qualitative tag for each of the one or more qualitative variables associated with a respective comparable specification; and filtering, by the appraisal engine, the plurality of comparable properties based on qualitative tags to identify the subset of comparable properties.

Example 11 is the method of any previous or subsequent Example, wherein determining, by the subset of comparable properties from the plurality of comparable properties comprising the one or more qualitative variables comprises: tagging, by the appraisal engine, the subset of comparable properties with a qualitative tag for each of the one or more qualitative variables associated with a respective comparable specification; and generating, by the appraisal engine, a visual representation of each qualitative tag associated with a respective comparable property of the subset of comparable properties.

Example 12 is the method of any previous or subsequent Example, wherein: the target property comprises a target specification comprising a plurality of quantitative variables; and determining, by the appraisal engine, the plurality of comparable properties comprises: determining, by the appraisal engine, a listing of properties comprising physical proximity to the target property; and filtering, by the appraisal engine, the listing of properties to determine the plurality of comparable properties based on the plurality of quantitative variables.

Example 13 is the method of any previous or subsequent Example, wherein determining, by the appraisal engine, the appraisal value of the target property comprises: determining, by the appraisal engine, an average sale value for the plurality of comparable properties; and generating, by the appraisal engine, the appraisal value of the target property based on the average sale value of subset of comparable properties for the plurality of comparable properties.

Example 14 is the method of any previous or subsequent Example, wherein the method further comprises: determining, by the appraisal engine, a quantity of qualitative variables associated with each comparable property of the subset of comparable; and ranking, by the appraisal engine, the subset of comparable properties based on the quantity of qualitative variables associated with each comparable property.

Example 15 is a computer readable storage media comprising processor-executable instructions configured to cause one or more processors to: determine, by an appraisal engine, a target property for appraisal, wherein the target property comprises a target specification; determine, by the appraisal engine, a plurality of comparable properties based the target specification; determine, by the appraisal engine, one or more qualitative variables of the target property; determine, by the appraisal engine, a subset of comparable properties from the plurality of comparable properties comprising the one or more qualitative variables; and generate, by the appraisal engine, a listing of the subset of comparable properties for appraisal of the target property.

Example 16 is the computer readable storage media of any previous or subsequent Example, wherein the processor-executable instructions to determine, by the appraisal engine, the subset of comparable properties from the plurality of comparable properties comprising the one or more qualitative variables cause the one or more processors to further execute processor-executable instructions stored in the computer readable storage media to: determine, by the appraisal engine, a plurality of comparable specifications, wherein each comparable specification corresponds to a respective comparable property of the plurality of comparable properties; perform, by the appraisal engine, a natural language process on each comparable specification of the plurality of comparable specifications based on the one or more qualitative variables; and identify, by the appraisal engine, the subset of comparable properties based on the natural language process.

Example 17 is the computer readable storage media of any previous or subsequent Example, wherein the processor-executable instructions to determine, by the appraisal engine, the subset of comparable properties from the plurality of comparable properties comprising the one or more qualitative variables cause the one or more processors to further execute processor-executable instructions stored in the computer readable storage media to: determine a plurality of specifications, wherein each of the plurality of specifications correspond to a respective comparable property of the plurality of comparable properties; parse each of the plurality of specifications based on a first qualitative variable of the one or more qualitative variables; identify a subset of specifications from the plurality of specifications comprising the first qualitative variable; tag each of the subset of comparable properties corresponding to the subset of specifications with a first qualitative tag; and generate a visual representation indicating that the subset of comparable properties comprises the first qualitative tag.

Example 18 is the computer readable storage media of any previous or subsequent Example, wherein: the processor-executable instructions to determine, by the appraisal engine, the subset of comparable properties comprising the one or more qualitative variables cause the one or more processors to further execute processor-executable instructions stored in the computer readable storage media to: tag, by the appraisal engine, each of the subset of comparable properties with one or more qualitative tags, wherein: each qualitative tag corresponds to a respective qualitative variable; and tagging a respective comparable property with a qualitative tag indicates that the comparable property comprises a corresponding qualitative variable; and the processor-executable instructions to generate, by the appraisal engine, the listing of the subset of comparable properties for the appraisal of the target property cause the one or more processors to further execute processor-executable instructions stored in the computer readable storage media to: generate, by the appraisal engine, one or more visual representations for each of the subset of comparable property based on the one or more qualitative tags; and generate, by the appraisal engine, the listing of the subset of the comparable properties based on the one or more visual representations.

Example 19 is the computer readable storage media of any previous or subsequent Example, wherein the processor-executable instructions cause the one or more processors to further execute processor-executable instructions stored in the computer readable storage media to: determine an average sale value for the subset of comparable properties; and generate an appraisal value of the target property based on the average sale value of the subset of comparable properties.

Example 20 is the computer readable storage media of any previous or subsequent Example, wherein the processor-executable instructions to determine, by the appraisal engine, the plurality of comparable properties based on the target property cause the one or more processors to further execute processor-executable instructions stored in the computer readable storage media to: determine, by the appraisal engine, a plurality of quantitative variables associated with the target property based on the target specification; determine, by the appraisal engine, a listing of properties comprising physical proximity to the target property; and filter, by the appraisal engine, the listing of properties based on the plurality of quantitative variables to determine the plurality of comparable properties.

## Claims

1. A computing apparatus comprising:
a computer-readable storage medium;
an appraisal engine comprising processor-executable instructions stored on the computer-readable storage medium; and
one or more processors coupled to the computer-readable storage medium and configured to execute the processor-executable instructions, wherein the processor-executable instructions, when executed by the one or more processors, direct the computing apparatus, to at least:
determine a target property for appraisal;
determine a plurality of comparable properties based on the target property;
determine a first qualitative variable associated with the target property;
generate a plurality of visual representations for a subset of comparable properties, wherein:
each of the visual representations indicates that a corresponding comparable property of the subset of comparable properties comprises the first qualitative variable; and
the plurality of comparable properties comprises the subset of comparable properties; and
determine an appraisal value of the target property based on the plurality of visual representations.

2. The computing apparatus of claim 1, wherein the processor-executable instructions to generate the plurality of visual representations, when executed by the one or more processors, further direct the computing apparatus to:
determine a plurality of specifications, wherein each of the plurality of specifications correspond to a respective comparable property of the plurality of comparable properties;
parse each of the plurality of specifications based on the first qualitative variable;
identify a subset of specifications from the plurality of specifications comprising the first qualitative variable;
tag each of the subset of comparable properties corresponding to the subset of specifications with a first qualitative tag; and
generate a first visual representation indicating the first qualitative tag for the subset of comparable properties, wherein the plurality of visual representations comprises the first visual representation.

3. The computing apparatus of claim 1 or claim 2, wherein the processor-executable instructions, when executed by the one or more processors, further direct the computing apparatus to:
determine a plurality of qualitative variables associated with the target property, wherein the plurality of visual representations indicate that a corresponding comparable property of the subset of comparable properties comprises one or more of the plurality of qualitative variables;
determine a quantity of qualitative variables associated with each comparable property of the subset of comparable; and
rank the subset of comparable properties based on the quantity of qualitative variables associated with each comparable property.

4. The computing apparatus of any one of claims 1 to 3, wherein the processor-executable instructions, when executed by the one or more processors, further direct the computing apparatus to:
determine a subset of comparable properties comprising the first qualitative variable;
tag each comparable property of the subset of comparable properties with a first qualitative tag; and
filter the plurality of comparable properties based on first qualitative tag to identify the subset of comparable properties.

5. The computing apparatus of any one of claims 1 to 4, wherein the processor-executable instructions to determine the plurality of comparable properties, when executed by the one or more processors, further direct the computing apparatus to:
determine a listing of properties comprising physical proximity to the target property;
determining a subset of properties within the listing of properties comprising temporal proximity to the target property; and
filtering, by the appraisal engine, the subset of properties to determine the plurality of comparable properties.

6. A method for estimating an appraisal value of a target property based on a plurality of comparable properties, the method comprising:
identifying, by an appraisal engine, a target property for appraisal, wherein the target property comprises a target specification;
determining, by the appraisal engine, a plurality of comparable properties based the target specification;
determining, by the appraisal engine, one or more qualitative variables of the target property;
determining, by the appraisal engine, a plurality of comparable specifications, wherein each comparable specification corresponds to a respective comparable property of the plurality of comparable properties;
determining, by the appraisal engine, a subset of comparable properties from the plurality of comparable properties comprising the one or more qualitative variables; and
generating, by the appraisal engine, the appraisal value of the target property based on the subset of comparable properties.

7. The method of claim 6, wherein determining the subset of comparable properties of the plurality of comparable properties comprising the one or more qualitative variables comprises:
parsing, by the appraisal engine, each of the comparable specifications for the one or more qualitative variables, the parsing comprising performing a natural language (NL) process on text within each of the comparable specification; and
identifying, by the appraisal engine, the subset of comparable properties based on a respective comparable specification comprising the one or more qualitative variables.

8. The method of claim 6 or claim 7, wherein determining the subset of comparable properties comprises:
tagging, by the appraisal engine, each comparable property of the subset of comparable properties with a qualitative tag corresponding to a respective qualitative variable; and
generating, by the appraisal engine, a visual representation of each qualitative tag associated with a respective comparable property of the subset of comparable properties.

9. The method of any one of claims 6 to 8, wherein:
the target property comprises a target specification comprising a plurality of quantitative variables; and
determining, by the appraisal engine, the plurality of comparable properties comprises:
determining, by the appraisal engine, a listing of properties comprising physical proximity to the target property; and
filtering, by the appraisal engine, the listing of properties to determine the plurality of comparable properties based on the plurality of quantitative variables.

10. The method of any one of claims 6 to 9, wherein generating, by the appraisal engine, the appraisal value of the target property comprises:
determining, by the appraisal engine, an average sale value for the plurality of comparable properties; and
generating, by the appraisal engine, the appraisal value of the target property based on the average sale value of subset of comparable properties for the plurality of comparable properties.

11. The method of any one of claims 6 to 10, wherein the method further comprises:
determining, by the appraisal engine, a quantity of qualitative variables associated with each comparable property of the subset of comparable; and
ranking, by the appraisal engine, the subset of comparable properties based on the quantity of qualitative variables associated with each comparable property.

12. A computer readable storage media comprising processor-executable instructions configured to cause one or more processors to:
determine, by an appraisal engine, a target property for appraisal, wherein the target property comprises a target specification;
determine, by the appraisal engine, a plurality of comparable properties based the target specification;
determine, by the appraisal engine, one or more qualitative variables of the target property;
determine, by the appraisal engine, a subset of comparable properties from the plurality of comparable properties comprising the one or more qualitative variables; and
generate, by the appraisal engine, a listing of the subset of comparable properties for appraisal of the target property.

13. The computer readable storage media of claim 12, wherein the processor-executable instructions to determine, by the appraisal engine, the subset of comparable properties from the plurality of comparable properties comprising the one or more qualitative variables cause the one or more processors to further execute processor-executable instructions stored in the computer readable storage media to:
determine, by the appraisal engine, a plurality of comparable specifications, wherein each comparable specification corresponds to a respective comparable property of the plurality of comparable properties;
perform, by the appraisal engine, a natural language process on each comparable specification of the plurality of comparable specifications based on the one or more qualitative variables; and
identify, by the appraisal engine, the subset of comparable properties based on the natural language process.

14. The computer readable storage media of claim 12 or claim 13, wherein the processor-executable instructions to determine, by the appraisal engine, the subset of comparable properties from the plurality of comparable properties comprising the one or more qualitative variables cause the one or more processors to further execute processor-executable instructions stored in the computer readable storage media to:
determine a plurality of specifications, wherein each of the plurality of specifications correspond to a respective comparable property of the plurality of comparable properties;
parse each of the plurality of specifications based on a first qualitative variable of the one or more qualitative variables;
identify a subset of specifications from the plurality of specifications comprising the first qualitative variable;
tag each of the subset of comparable properties corresponding to the subset of specifications with a first qualitative tag; and
generate a visual representation indicating that the subset of comparable properties comprises the first qualitative tag.

15. The computer readable storage media of any one of claims 12 to 14, wherein:
the processor-executable instructions to determine, by the appraisal engine, the subset of comparable properties comprising the one or more qualitative variables cause the one or more processors to further execute processor-executable instructions stored in the computer readable storage media to:
tag, by the appraisal engine, each of the subset of comparable properties with one or more qualitative tags, wherein:
each qualitative tag corresponds to a respective qualitative variable; and
tagging a respective comparable property with a qualitative tag indicates
that the comparable property comprises a corresponding qualitative variable; and
the processor-executable instructions to generate, by the appraisal engine, the listing of the subset of comparable properties for the appraisal of the target property cause the one or more processors to further execute processor-executable instructions stored in the computer readable storage media to:
generate, by the appraisal engine, one or more visual representations for each of the subset of comparable property based on the one or more qualitative tags; and
generate, by the appraisal engine, the listing of the subset of the comparable properties based on the one or more visual representations.
